# EUROPEAN PATENT APPLICATION

(11) **EP 2 645 662 A1**
(43) Date of publication of application: **02.10.2013**
(21) Application number: 11854406.3
(22) Date of filing: 08.11.2011
(51) Int. Cl.: H04L 29/06, H04B 10/12, H04J 14/00

(54) **METHOD AND SYSTEM FOR AUTOMATICALLY DISCOVERING ODUFLEX BANDWIDTH LOSSLESS ADJUSTMENT CAPABILITY**

(30) Priority: 27.12.2010 CN 201010607730
(71) Applicant: ZTE Corporation, Shenzhen, Guangdong 518057 (CN)
(72) Inventor: TANG, Kexin, Shenzhen Guangdong 518057 (CN); FU, Xihua, Shenzhen Guangdong 518057 (CN)
(74) Representative: Lampis, Marco
(86) International application number: PCT/CN2011/081918
(87) International publication number: WO 2012/088962

(57) **Abstract**

A method and system for automatically discovering a flexible rate Optical Data Unit (ODUflex) bandwidth hitless resizing capability are provided in the present document. The method includes: a source end interface of a link sending link summary message to an opposite end interface of the link, wherein the link summary message carries information of whether the source end interface of the link supports the ODUflex bandwidth hitless resizing capability; after receiving the link summary message, the opposite end interface of the link feeding back message to the source end interface of the link according to said information or according to said information and whether the opposite end interface of the link supports the ODUflex bandwidth hitless resizing capability, the source end interface of the link determining whether the link supports the ODUflex bandwidth hitless resizing capability according to the message fed back by the opposite end interface of the link. In the present document, by extending a DATA_LINK object in a Link Management Protocol (LMP), the LMP is enabled to automatically discover an attribute of whether the link supports ODUflex bandwidth hitless resizing (i.e. a G.hao protocol), which remedies shortages of the control plane and enhances functions of the control plane.

## Description

### Technical Field

The present document relates to the field of communication, and especially, to a method and system for automatically discovering an ODUflex bandwidth hitless resizing capability.

### Background of the Related Art

Compared with the previous version v2, new signal types such as Optical Data Unit (ODU)0, ODU4, ODU2e and flexible rate ODU (ODUflex) are newly added in the version v3 of G.709 of the International Telecommunication Union Telecommunication Standardization Sector (ITU-T). The ODUflex is used to transparently bit-transmit client signals at any rates through Optical Transport Network (OTN) and use a Generic Mapping Procedure (GMP) to map the ODUflex into a High Order ODU (HO ODU). The ODUflex can be adaptive to client signals at any rates, and then a Low Order ODU (LO ODU) is mapped into a corresponding number of tributary timeslots of the HO ODU. In this technology, not only effective transmission of the existing various client signals is considered, but also client signals which will appear in the future in the meantime. The ODUflex is divided into two kinds, one is used for bearing ODUflex(CBR) of Constant Bit Rate (CBR) client signals, and the CBR client signals are mapped into the ODUflex(CBR) through the GMP; and the other one is used for bearing ODUflex(GFP) of packet client signals, and the packet client signals are encapsulated into the ODUflex(GFP) through a Generic Framing Procedure (GFP).

With regard to the ODUflex(GFP), since the bandwidth of the packet client signals will be changed over time, allocating fixed bandwidths to the ODUflex(GFP) will not be beneficial to the effective utilization of bandwidth resources. If the ODUflex(GFP) can support a dynamic bandwidth adjustment, not only various bandwidth requirements of the packet client signals can be better satisfied, but also the bandwidth utilization ratio can be effectively improved and the bandwidth resources can be saved. Therefore, the ODUflex(GFP) is required to have a bandwidth hitless resizing capability. The ODUflex(GFP) bandwidth hitless resizing means that the ODUflex(GFP) is required to complete the bandwidth resizing in the case of dynamic and no interruption of the existing services. However, in the related art, not all interfaces support the ODUflex bandwidth hitless resizing capability, a plurality of interfaces do not support the ODUflex bandwidth hitless resizing capability, when it is required to select links which have the ODUflex bandwidth hitless resizing capability, a control plane is required to be able to discover which links have the ODUflex bandwidth hitless resizing capability and then to flood the information out through a routing protocol.

### Summary of the Invention

The technical problem required to be solved by the present document is to provide a method and system for automatically discovering an ODUflex bandwidth hitless resizing capability, to automatically discover the ODUflex bandwidth hitless resizing capability.

In order to solve the above technical problem, the present document provides a method for automatically discovering a flexible rate Optical Data Unit (ODUflex) bandwidth hitless resizing capability, which comprises:
a source end interface of a link sending link summary message to an opposite end interface of the link, wherein the link summary message carries information of whether the source end interface of the link supports the ODUflex bandwidth hitless resizing capability;
after receiving the link summary message, the opposite end interface of the link feeding back message to the source end interface of the link according to said information or according to said information and whether the opposite end interface of the link supports the ODUflex bandwidth hitless resizing capability, and the source end interface of the link determining whether the link supports the ODUflex bandwidth hitless resizing capability according to the message fed back by the opposite end interface of the link.

The above method can further be characterized in that: the link summary message carrying the information of whether the source end interface of the link supports the ODUflex bandwidth hitless resizing capability is implemented by the following way: a data link object of the link summary message including a subobject, and the subobject including a field which represents whether the source end interface supports the ODUflex bandwidth hitless resizing capability.

The above method can further be characterized in that: the step of, after receiving the link summary message, the opposite end interface of the link feeding back message to the source end interface of the link according to said information or according to said information and whether the opposite end interface of the link supports the ODUflex bandwidth hitless resizing capability comprises:
after receiving the link summary message, the opposite end interface of the link reading the field in the subobject,
making a judgment on the field, if judging that the field represents that the source end interface does not support the ODUflex bandwidth hitless resizing capability, feeding back link summary not-acknowledgment message to the source end interface of the link; if judging that the field represents that the source end interface supports the ODUflex bandwidth hitless resizing capability, then judging whether the opposite end interface of the link supports the ODUflex bandwidth hitless resizing capability, if not supporting, feeding back the link summary not-acknowledgment message to the source end interface of the link, and if supporting, feeding back link summary acknowledgment message to the source end interface of the link;
wherein, the link summary not-acknowledgment message includes an object used for describing error causes.

The above method can further be characterized in that: the object used for describing the error causes includes information used for indicating that the error causes are unacceptable non-negotiable link summary parameters.

The above method can further be characterized in that: the opposite end interface of the link reading the field in the subobject is performed in a condition that a local interface mapping relationship or a remote end interface mapping relationship carried in the link summary message is matched with an interface mapping relationship stored in the opposite end.

The above method can further be characterized in that: the ODUflex bandwidth hitless resizing capability is defined through a G.hao protocol.

The above method can further be characterized in that: the step of a source end interface of the link sending link summary message to an opposite end interface of the link is specifically: the source end interface of the link periodically sending the link summary message to the opposite end interface of the link through a link management protocol.

In order to solve the above problem, the present document further provides a system for automatically discovering a flexible rate Optical Data Unit (ODUflex) bandwidth hitless resizing capability, which comprises:
a node in which a source end interface of a link is located, configured to send link summary message to a node in which an opposite end interface of the link is located, wherein the link summary message carries information of whether the source end interface of the link supports the ODUflex bandwidth hitless resizing capability; and configured to determine whether the link supports the ODUflex bandwidth hitless resizing capability according to message fed back by the node in which the opposite end interface of the link is located; and
the node in which the opposite end interface of the link is located, configured to: after receiving the link summary message, feed back message to the node in which the source end interface of the link is located according to said information or according to said information and whether the opposite end interface of the link supports the ODUflex bandwidth hitless resizing capability.

The above system can further be characterized in that: the link summary message carrying the information of whether the source end interface of the link supports the ODUflex bandwidth hitless resizing capability is implemented by the following way: a data link object of the link summary message including a subobject, and the subobject including a field which represents whether the source end interface supports the ODUflex bandwidth hitless resizing capability.

The above system can further be characterized in that: the node in which the opposite end interface of the link is located comprises:
a reading module, configured to: after receiving the link summary message, read the field in the subobject;
a first judgment module, configured to: judge whether the field represents that the source end interface supports the ODUflex bandwidth hitless resizing capability;
a second judgment module, configured to: if the first judgment module judges that the field represents that the source end interface supports the ODUflex bandwidth hitless resizing capability, judge whether the opposite end interface of the link supports the ODUflex bandwidth hitless resizing capability;
a first sending module, configured to: if the first judgment module judges that the field represents that the source end interface does not support the ODUflex bandwidth hitless resizing capability or the second judgment module judges that the opposite end interface of the link does not support the ODUflex bandwidth hitless resizing capability, feed back link summary not-acknowledgment message to the node in which the source end interface of the link is located; and
a second sending module, configured to: if the second judgment module judges that the opposite end interface of the link supports the ODUflex bandwidth hitless resizing capability, feed back link summary acknowledgment message to the node in which the source end interface of the link is located;
wherein, the link summary not-acknowledgment message includes an object used for describing error causes, and the object used for describing the error causes includes information used for indicating that the error causes are unacceptable non-negotiable link summary parameters.

The above system can further be characterized in that: the reading module comprises:
a matching unit, configured to: after receiving the link summary message, perform matching between a local interface mapping relationship or a remote end interface mapping relationship carried in the link summary message and an interface mapping relationship stored in the opposite end, and if the matching is consistent, trigger a reading unit;
the reading unit, configured to: after being triggered, read the field in the subobject.

The above system can further be characterized in that: the ODUflex bandwidth hitless resizing capability is defined through a G.hao protocol.

In conclusion, a method and system for automatically discovering an ODUflex bandwidth hitless resizing capability are provided in the present document, and by extending a DATA_LINK object in the Link Management Protocol (LMP), the LMP is enabled to automatically discover an attribute of whether the link supports the ODUflex bandwidth hitless resizing (i.e. the G.hao protocol). In the present document, shortages of the control plane are remedied and functions of the control plane are enhanced.

### Brief Description of Drawings

FIG. 1 is a schematic diagram of a system for automatically discovering the ODUflex bandwidth hitless resizing capability according to the example of the present document.
FIG. 2 is a flow diagram of automatically discovering the ODUflex bandwidth hitless resizing capability according to the embodiment of the present document.
FIG. 3 is a schematic diagram of a format of a Hitless Resize subobject according to the example of the present document.
FIG. 4 is a process of automatically discovering that the link supports a G.hao protocol in the example 1 of the present document.
FIG. 5 is a process of automatically discovering that the link does not support a G.hao protocol in the example 2 of the present document.
FIG. 6 is a process of automatically discovering that the link does not support a G.hao protocol in the example 3 of the present document.

### Preferred Embodiments of the Invention

Currently, the ITU-T has raised a suggestion with regard to the ODUflex bandwidth hitless resizing, i.e. the G.hao protocol, and in the G.hao protocol, the ODUflex bandwidth hitless resizing is divided into two stages, namely Link Connection Resizing (LCR) and Bandwidth Resizing (BWR), so as to perform hitless resizing on an ODUflex.

A Link Management Protocol (LMP) of the Internet Engineering Task Force (IETF) is operated between a pair of LMP peer nodes, and four programs are defined to provide the following four functions respectively.

Control channel management: the control channel management is with respect to negotiation and maintenance of an LMP session itself, and it is used for establishing a control channel between adjacent physical nodes on a control plane after discovered by the neighbor, so as to perform parameter negotiation and transmission of signaling message.

Link summary association: the main object of the link summary association is to discover and negotiate a Traffic Engineering (TE) link IP mapping relationship and a data link summary between adjacent nodes, it can be implemented by interacting link aggregation message and replying message. The link aggregation message will normally contain: a TE link ID required to be announced, all links contained by the TE link and the related link summaries.

Link connectivity verification: the link connectivity verification has two main objects, one is to verify the connectivity of specific data links, and the other is to automatically map a local interface ID and a remote end interface ID of data links and TE links. The link connectivity verification is an optical function in the LMP and is decided by a negotiable Verification Flag configured in the parameter negotiation process;

Fault management: a whole set of fault location mechanism is raised in the LMP to determine a specific link which has a fault. This process is initiated by a node which has a data link fault detected in the downstream, and through an interaction between channel fault message and recovery message, link statuses are detected hop-by-hop toward upstream along the LSP until the link which has the fault is located. The link fault management is also an optical function and is decided by a negotiable Fault Management Flag configured in the parameter negotiation process.

In a link summary association function of the LMP, three pieces of message such as LinkSummary message, LinkSummaryAck message and LinkSummaryNack message are defined, objects of the three pieces of message are link summaries which are divided into a negotiable summary and a non-negotiable summary. In both the LinkSummary message and the LinkSummaryNack message, a DATA_LINK object is carried to represent a summary of the link at one end. In the existing DATA_LINK, the following two subobjects such as an Interface Switching Type subobject and a Wavelength subobject are defined for the link summary, and by carrying these two subobjects, the support to the two attributes of interface switching type and wavelength of the link is implemented in an auto-discovery program. However, the defined subobjects do not support an auto-discovery function of an attribute of whether the link supports the G.hao protocol.

A method for automatically discovering an ODUflex bandwidth hitless resizing capability is provided in the embodiment of the present document, information of whether a source end interface of a link supports the ODUflex bandwidth hitless resizing capability is carried in link summary message sent by the source end interface of the link to an opposite end interface of the link, and then it is to discover whether the link supports the ODUflex bandwidth hitless resizing capability according to message fed back by the opposite end interface of the link.

The present document will be described in detail in combination with the accompanying drawings.

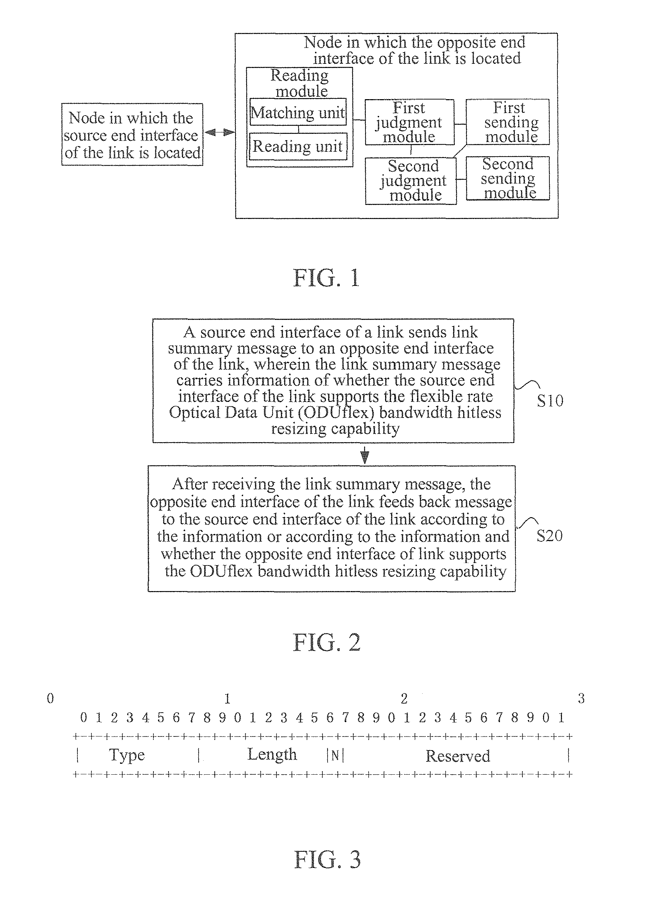

FIG. 1 is a schematic diagram of a system for automatically discovering the ODUflex bandwidth hitless resizing capability according to the example of the present document, and as shown in FIG. 1, a node in which a source end interface of a link is located and a node in which an opposite end interface of the link is located are included, wherein,
the node in which the source end interface of the link is located is used to send link summary message to the node in which the opposite end interface of the link is located, wherein the link summary message carries information of whether the source end interface of the link supports the ODUflex bandwidth hitless resizing capability; and it is used to determine whether the link supports the ODUflex bandwidth hitless resizing capability according to message fed back by the node in which the opposite end interface of the link is located;
the node in which the opposite end interface of the link is located is used to: after receiving the link summary message, feed back the message to the node in which the source end interface of the link is located according to the information or according to the information and whether the opposite end interface of the link supports the ODUflex bandwidth hitless resizing capability.

In the example, the link summary message carrying the information of whether the source end interface of the link supports the ODUflex bandwidth hitless resizing capability is implemented by the following way: a data link object of the link summary message including a subobject (i.e. a Hitless Resize subobject), and the subobject including a field which represents whether the source end interface supports the ODUflex bandwidth hitless resizing capability.

The node in which the opposite end interface of the link is located in the example can include:
a reading module, configured to: after receiving the link summary message, read the field in the subobject;
a first judgment module, configured to: judge whether the field represents that the source end interface supports the ODUflex bandwidth hitless resizing capability;
a second judgment module, configured to: if the first judgment module judges that the field represents that the source end interface supports the ODUflex bandwidth hitless resizing capability, judge whether the opposite end interface of the link supports the ODUflex bandwidth hitless resizing capability;
a first sending module, configured to: if the first judgment module judges that the field represents that the source end interface does not support the ODUflex bandwidth hitless resizing capability or the second judgment module judges that the opposite end interface of the link does not support the ODUflex bandwidth hitless resizing capability, feed back link summary not-acknowledgment message to the node in which the source end interface of the link is located; and
a second sending module, configured to: if the second judgment module judges that the opposite end interface of the link supports the ODUflex bandwidth hitless resizing capability, feed back link summary acknowledgment message to the node in which the source end interface of the link is located;
wherein, the link summary not-acknowledgment message includes an object used for describing error causes, and the object used for describing the error causes includes information used for indicating that the error causes are unacceptable non-negotiable link summary parameters.

Wherein, the reading module can include a matching unit and a reading unit,
the matching unit is configured to: after receiving the link summary message, perform matching between a local interface mapping relationship or a remote end interface mapping relationship carried in the link summary message and an interface mapping relationship stored in said link opposite end, and if the matching is consistent, trigger the reading unit;
the reading unit is configured to: after being triggered, read the field in the subobject.

The ODUflex bandwidth hitless resizing capability in the example is defined through a G.hao protocol. Certainly, the ODUflex bandwidth hitless resizing capability also can be defined through other protocols in other examples.

FIG. 2 is a flow diagram of automatically discovering the ODUflex bandwidth hitless resizing capability according to the present document, and as shown in FIG. 2, the following steps are included.

In step S10, a source end interface of a link sends link summary message to an opposite end interface of the link, wherein the link summary message carries information of whether the source end interface of the link supports the ODUflex bandwidth hitless resizing capability.

In step S20, after receiving the link summary message, the opposite end interface of the link feeds back message to the source end interface of the link according to the information or according to the information and whether the opposite end interface of the link supports the ODUflex bandwidth hitless resizing capability, and the source end interface of the link determines whether the link supports the ODUflex bandwidth hitless resizing capability according to the message fed back by the opposite end interface of the link.

Only when both the source end interface of the link and the opposite end interface of the link support the ODUflex bandwidth hitless resizing capability, it can be determined that the link supports the ODUflex bandwidth hitless resizing.

Therefore, automatically discovering whether the link supports the ODUflex bandwidth hitless resizing capability can be implemented through the method of the present document.

In order to further understand the present document, the specific implementation methods of the present document will be further described in detail in combination with the accompanying drawings and specific application examples below.

In one specific example, a performance that the link supports the ODUflex bandwidth hitless resizing capability (i.e. the G.hao protocol) can be discovered automatically in an Optical Transport Network (OTN) by extending the LMP. Specifically, in the example, by extending a DATA_LINK object in the LMP, a Hitless Resize subobject can be added in the object to carry an attribute of whether the interface at the current end of the link supports the bandwidth hitless resizing capability (i.e. the G.hao protocol).

When it is wished to know the information of whether the link supports the G.hao protocol, the interface at one end of the link enables the opposite end interface to obtain an attribute of whether the interface at the current end supports the G.hao protocol through a link summary association program in the LMP extended in the present document, and then the opposite end interface compares whether the interfaces at both ends of the link both support the G.hao protocol, then obtains a conclusion to send the source end interface through messaging, and the conclusion of whether the link supports the G.hao protocol can be obtained.

In the example, the link summary association program is operated at both ends of the link to discover whether the opposite end interface supports the G.hao protocol, and when the interfaces at both ends of the link support the G.hao protocol and flooding is performed in the routing protocol, it can further point out that the entire link supports the G.hao protocol.

Firstly, the LMP is extended, a Hitless Resize subobject is added in the existing DATA_LINK object to carry the attribute of whether the interface at the current end of the link supports the ODUflex bandwidth hitless resizing capability (i.e. the G.hao protocol), and the extended DATA_LINK object is carried through LinkSummary message in the link summary association program so as to make the interfaces at both ends of the link perform negotiation and association on the attribute of ODUflex bandwidth hitless resizing capability, such that the LMP automatically discovers the performance of ODUflex bandwidth hitless resizing capability of the link.

The following descriptions are for definitions of the LinkSummary message and the LinkSummaryNack message in the RFC4204.

### <LinkSummary Message> ::= <Common Header>

<MESSAGE_ID>
<TE_LINK>
<DATA_LINK>
[<DATA_LINK>...]

### <LinkSummaryNack Message> ::= <Common Header>

<MESSAGE_ID_ACK>
<ERROR_CODE>
[<DATA_LINK>...]

In the above message definitions, Common Header is a generic message header of LMP message, TE_LINK is used for identifying a TE link between the two interfaces of the link, and DATA_LINK is used for identifying a data link between the two interfaces. ERROR_CODE is used for describing error causes. The encoding formats of specific definitions of these four objects may refer to the RFC4204.

FIG. 3 illustrates a format of the Hitless Resize subobject newly defined in the DATA_LINK object after extending the LMP, and as shown in FIG. 3, wherein:
a Type field, whose length is of 8 bits, represents a type of the subobject, and a value of the Type field is 3;
a Length field, whose length is of 8 bits, represents a total length of the subobject, and a byte (8 bits) is taken as a unit. The total length of the subobject includes the length occupied by the Type field and the length occupied by the Length field. According to the definition in the RFC4202, a value of the Length is at least 4 (bytes) and it must be an integral multiple of 4 (bytes);
an N field, whose length is of 1 bit, represents the performance that whether the interface supports the G.hao protocol. In the present document, 2 values are further defined for the field:
when a value of N is 0, it is represented that the interface does not support the G.hao protocol;
when a value of N is 1, it is represented that the interface supports the G.hao protocol.

A method for automatically discovering whether the link supports the G.hao protocol is provided in the example, which includes:
before or after the link enters a start (UP) status and at any moment before it enters the link verification process, a source end interface of the link periodically sending LinkSummary message to an opposite end interface of the link, and informing the opposite end interface of the link of whether the source end interface of the link supports the G.hao protocol;
after receiving the LinkSummary message, the opposite end interface of the link firstly determining whether a local interface mapping relationship and/or a remote end interface mapping relationship is matched with an interface mapping relationship stored in the current end, and then determining whether the interfaces at both ends of the link support the G.hao protocol. The specific content is as follows:

If the LinkSummary message sent by the source end interface points out that the source end interface supports the G.hao protocol and the opposite end interface also supports the G.hao protocol, the opposite end interface sends LinkSummaryAck message to the source end interface, which represents that the interfaces at both ends of the link support the G.hao protocol. That the entire link supports the G.hao protocol is discovered through an auto-discovery process.

If the LinkSummary message sent by the source end interface points out that the source end interface supports the G.hao protocol and the opposite end interface does not support the G.hao protocol, the opposite end interface sends LinkSummaryNack message to the source end interface, according to the definition in the RFC4204, C-Type in the RROR_CODE object contained in the message is equal to 2, which represents that the error code indicates an error of the LinkSummary message (LINK_SUMMARY_ERROR), a value of Value is 0x01, and if it is further pointed out that error causes are Unacceptable non-negotiable LINK_SUMMARY parameters, not all the interfaces at both ends of the link support the G.hao protocol. That the entire link does not support the G.hao protocol is discovered through an auto-discovery process.

If the LinkSummary message sent by the source end interface points out that the source end interface does not support the G.hao protocol, no matter whether the opposite end interface supports the G.hao protocol or not, the LinkSummaryNack message is sent to the source end interface, according to the definition in the RFC4204, C-Type in the RROR_CODE object contained in the message is equal to 2, which represents that the error code indicates an error of the LinkSummary message (LINK_SUMMARY_ERROR), a value of Value is 0x01, and if it is further pointed out that error causes are Unacceptable non-negotiable LINK_SUMMARY parameters, not all the interfaces at both ends of the link support the G.hao protocol. That the entire link does not support the G.hao protocol is discovered through an auto-discovery process.

In the example, the attribute of whether the interfaces at both ends of the link support the bandwidth hitless resizing capability (i.e. the G.hao protocol) can be obtained through the above LMP program, that is, the attribute of whether the entire link supports the bandwidth hitless resizing capability (i.e. the G.hao protocol) is discovered through the auto-discovery process.

Wherein, the DATA-LINK object contained in the LinkSummary message carries the Hitless Resize subobject defined by the present document, so as to carry the attribute of whether the interface at the current end of the link supports the bandwidth hitless resizing capability (i.e. the G.hao protocol);
wherein, the ERROR_CODE object contained in the LinkSummaryNack message is used for further pointing out the error causes;
wherein, the auto-discovery process of the link is completed through the LIMP.

### Example 1

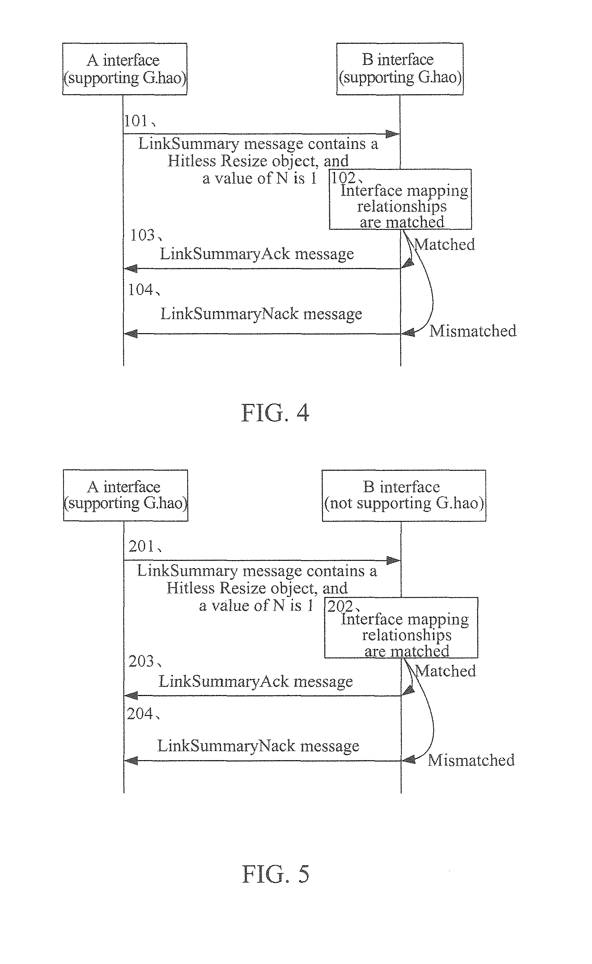

Both a source end (A) interface and an opposite end (B) interface support a G.hao protocol, that is, interfaces at both ends of a link support the G.hao protocol, thus a link between the two interfaces supports the G.hao protocol. A process of automatically discovering an attribute of whether the link supports the G.hao protocol according to the example includes the following steps as shown in FIG. 4.

In step 101, after the link starts, the A interface sends LinkSummary message to the B interface, the LinkSummary message contains a DATA_LINK object, and the DATA_LINK object carries a Hitless Resize subobject newly defined by the example, wherein a value of N is 1, which represents that the A interface supports the G.hao protocol.

In step 102, after receiving the LinkSummary message, the B interface firstly determines whether a local interface mapping relationship and/or a remote end interface mapping relationship carried in the message is matched with an interface mapping relationship stored in the B interface, if matched, step 103 is executed, and if mismatched, step 104 is executed.

In step 103, the B interface reads that the value of N in the newly defined Hitless Resize subobject in the LinkSummary message is 1, which represents that the A interface supports the G.hao protocol. Since the B interface also supports the G.hao protocol, which represents that the interfaces at both ends of the link respectively support the G.hao protocol, the B interface sends LinkSummaryAck message to the A interface, which represents that the interfaces at both ends of the link reach an agreement on the attribute of whether supporting the G.hao protocol, that is, the entire link supports the G.hao protocol.

In step 104, after receiving the LinkSummary message, if discovering that the local interface mapping relationship and/or the remote end interface mapping relationship carried in the message is mismatched with the interface mapping relationship stored in the B interface, the B interface sends LinkSummaryNack message to the A interface which points outs that the interface mapping relationships are mismatched.

### Example 2

A source end (A) interface supports a G.hao protocol and an opposite end (B) interface does not support the G.hao protocol, and not all interfaces at both ends of a link support the G.hao protocol, thus a link between the two interfaces does not support the G.hao protocol. A process of automatically discovering an attribute that the link does not support the G.hao protocol includes the following steps as shown in FIG. 5.

In step 201, the A interface sends LinkSummary message to the B interface, the LinkSummary message contains a DATA_LINK object, and the DATA_LINK object carries a Hitless Resize subobject newly defined by the example, wherein a value of N is 1, which represents that the A interface supports the G.hao protocol.

In step 202, after receiving the LinkSummary message, the B interface firstly determines whether a local interface mapping relationship and/or a remote end interface mapping relationship carried in the message is matched with an interface mapping relationship stored in the B interface, if matched, step 203 is executed, and if mismatched, step 204 is executed.

In step 203, the B interface reads that the value of N in the Hitless Resize subobject newly defined by the example is 1, which represents that the A interface supports the G.hao protocol. Since the B interface does not support the G.hao protocol, which represents that not all the interfaces at both ends of the link support the G.hao protocol, the link does not support the G.hao protocol, and thus the B interface sends LinkSummaryNack message to the A interface.

According to the definition in the RFC4204, C-Type in an ERROR_CODE object carried in the LinkSummaryNack message is equal to 2, which represents that the error code indicates an error of the LinkSummary message (LINK_SUMMARY_ERROR), a value of Value is 0x01, and if it is further pointed out that error causes are Unacceptable non-negotiable LINK_SUMMARY parameters, not all the interfaces at both ends of the link support the G.hao protocol. That the entire link does not support the G.hao protocol is discovered through an auto-discovery process.

In step 204, after receiving the LinkSummary message, if discovering that the local interface mapping relationship and/or the remote end interface mapping relationship carried in the message is mismatched with the interface mapping relationship stored in the B interface, the B interface sends the LinkSummaryNack message to the A interface and points outs that the interface mapping relationships are mismatched.

### Example 3

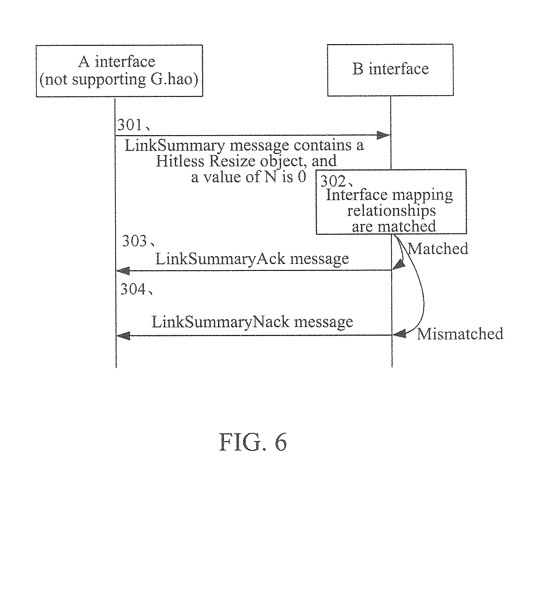

A source end (A) interface does not support a G.hao protocol, no matter whether an opposite end (B) interface supports the G.hao protocol or not, not all the interfaces at both ends of the link support the G.hao protocol, thus a link between the two interfaces does not support the G.hao protocol. A process of automatically discovering an attribute that the link does not support the G.hao protocol includes the following steps as shown in FIG. 6.

In step 301, the A interface sends LinkSummary message to the B interface, the LinkSummary message contains a DATA_LINK object, and the DATA_LINK object carries a Hitless Resize subobject newly defined by the example, wherein a value of N is 0, which represents that the A interface does not support the G.hao protocol.

In step 302, after receiving the LinkSummary message, the B interface firstly determines whether a local interface mapping relationship and/or a remote end interface mapping relationship carried in the message is matched with an interface mapping relationship stored in the B interface, if matched, step 303 is executed, and if mismatched, step 304 is executed.

In step 303, the B interface reads that the value of N in the Hitless Resize subobject newly defined by the example is 0, which represents that the A interface does not support the G.hao protocol, since not all the interfaces at both ends of the link support the G.hao protocol, the link does not support the G.hao protocol, and thus the B interface sends LinkSummaryNack message to the A interface.

According to the definition in the RFC4204, C-Type in an ERROR_CODE object carried in the LinkSummaryNack message is equal to 2, which represents that the error code indicates an error of the LinkSummary message (LINK_SUMMARY_ERROR), a value of Value is 0x01, and if it is further pointed out that error causes are Unacceptable non-negotiable LINK_SUMMARY parameters, not all the interfaces at both ends of the link support the G.hao protocol. That the entire link does not support the G.hao protocol is discovered through an auto-discovery process.

In step 304, after receiving the LinkSummary message, if discovering that the local interface mapping relationship and/or the remote end interface mapping relationship carried in the message is mismatched with the interface mapping relationship stored in the B interface, the B interface sends the LinkSummaryNack message to the A interface and points outs that the interface mapping relationships are mismatched.

Up to this point, through the LinkSummary message carrying the Hitless Resize subobject newly defined by the present document and according to the LinkSummaryNack message carrying the ERROR_CODE object used for describing the error causes defined in the RFC4204, it is to discover whether the interfaces at both ends of the link respectively support the G.hao protocol and then to automatically discover whether the entire link supports the bandwidth hitless resizing (i.e. the G.hao protocol).

The basic LMP program is not changed in the implementation, and it is exclusively used for identifying the attribute of whether the link supports the G.hao protocol by defining the Hitless Resize subobject.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each module/unit in the above examples can be implemented in a form of hardware, and also can be implemented in a form of software function module. The present document is not limited to any combination of hardware and software in a specific form.

The above description is only the preferred examples of the present document, Certainly, the present document can still have other various examples, the skilled familiar to the art can make various corresponding changes and transformations according to the present document without departing from the spirit and essence of the present document, and these corresponding changes and transformations shall all fall into the protection scope of the appended claims of the present document.

### Industrial Applicability

A method and system for automatically discovering an ODUflex bandwidth hitless resizing capability are provided in the present document, and by extending a DATA_LINK object in the LMP, the LMP is enabled to automatically discover an attribute of whether the link supports the ODUflex bandwidth hitless resizing (i.e. the G.hao protocol). In the present document, shortages of the control plane are remedied, and functions of the control plane are enhanced.

## Claims

1. A method for automatically discovering a flexible rate Optical Data Unit (ODUflex) bandwidth hitless resizing capability, comprising:
a source end interface of a link sending link summary message to an opposite end interface of the link, wherein the link summary message carries information of whether the source end interface of the link supports the ODUflex bandwidth hitless resizing capability;
after receiving the link summary message, the opposite end interface of the link feeding back message to the source end interface of the link according to said information or according to said information and whether the opposite end interface of the link supports the ODUflex bandwidth hitless resizing capability, and the source end interface of the link determining whether the link supports the ODUflex bandwidth hitless resizing capability according to the message fed back by the opposite end interface of the link.

2. The method according to claim 1, wherein:
the link summary message carrying the information of whether the source end interface of the link supports the ODUflex bandwidth hitless resizing capability is implemented by a following way: a data link object of the link summary message including a subobject, and the subobject including a field which represents whether the source end interface supports the ODUflex bandwidth hitless resizing capability.

3. The method according to claim 2, wherein: the step of, after receiving the link summary message, the opposite end interface of the link feeding back message to the source end interface of the link according to said information or according to said information and whether the opposite end interface of the link supports the ODUflex bandwidth hitless resizing capability comprises:
after receiving the link summary message, the opposite end interface of the link reading the field in the subobject,
making a judgment on the field, if judging that the field represents that the source end interface does not support the ODUflex bandwidth hitless resizing capability, feeding back link summary not-acknowledgment message to the source end interface of the link; if judging that the field represents that the source end interface supports the ODUflex bandwidth hitless resizing capability, then judging whether the opposite end interface of the link supports the ODUflex bandwidth hitless resizing capability, if not supporting, feeding back the link summary not-acknowledgment message to the source end interface of the link, and if supporting, feeding back link summary acknowledgment message to the source end interface of the link;
wherein, the link summary not-acknowledgment message includes an object used for describing error causes.

4. The method according to claim 3, wherein: the object used for describing the error causes includes information used for indicating that the error causes are unacceptable non-negotiable link summary parameters.

5. The method according to claim 3, wherein: the opposite end interface of the link reading the field in the subobject is performed in a condition that a local interface mapping relationship or a remote end interface mapping relationship carried in the link summary message is matched with an interface mapping relationship stored in the opposite end.

6. The method according to any one of claims 1 to 5, wherein: the ODUflex bandwidth hitless resizing capability is defined through a G.hao protocol.

7. The method according to any one of claims 1 to 5, wherein:
the step of a source end interface of the link sending link summary message to an opposite end interface of the link is: the source end interface of the link periodically sending the link summary message to the opposite end interface of the link through a link management protocol.

8. A system for automatically discovering a flexible rate Optical Data Unit (ODUflex) bandwidth hitless resizing capability, comprising:
a node in which a source end interface of a link is located, configured to send link summary message to a node in which an opposite end interface of the link is located, wherein the link summary message carries information of whether the source end interface of the link supports the ODUflex bandwidth hitless resizing capability; and configured to determine whether the link supports the ODUflex bandwidth hitless resizing capability according to message fed back by the node in which the opposite end interface of the link is located; and
the node in which the opposite end interface of the link is located, configured to: after receiving the link summary message, feed back the message to the node in which the source end interface of the link is located according to said information or according to said information and whether the opposite end interface of the link supports the ODUflex bandwidth hitless resizing capability.

9. The system according to claim 8, wherein:
the link summary message carrying the information of whether the source end interface of the link supports the ODUflex bandwidth hitless resizing capability is implemented by a following way: a data link object of the link summary message including a subobject, and the subobject including a field which represents whether the source end interface supports the ODUflex bandwidth hitless resizing capability.

10. The system according to claim 9, wherein: the node in which the opposite end interface of the link is located comprises:
a reading module, configured to: after receiving the link summary message, read the field in the subobject;
a first judgment module, configured to: judge whether the field represents that the source end interface supports the ODUflex bandwidth hitless resizing capability;
a second judgment module, configured to: if the first judgment module judges that the field represents that the source end interface supports the ODUflex bandwidth hitless resizing capability, judge whether the opposite end interface of the link supports the ODUflex bandwidth hitless resizing capability;
a first sending module, configured to: if the first judgment module judges that the field represents that the source end interface does not support the ODUflex bandwidth hitless resizing capability or the second judgment module judges that the opposite end interface of the link does not support the ODUflex bandwidth hitless resizing capability, feed back link summary not-acknowledgment message to the node in which the source end interface of the link is located; and
a second sending module, configured to: if the second judgment module judges that the opposite end interface supports the ODUflex bandwidth hitless resizing capability, feed back link summary acknowledgment message to the node in which the source end interface of the link is located;
wherein, the link summary not-acknowledgment message includes an object used for describing error causes, and the object used for describing the error causes includes information used for indicating that the error causes are unacceptable non-negotiable link summary parameters.

11. The system according to claim 10, wherein: the reading module comprises a matching unit and a reading unit:
a matching unit is configured to: after receiving the link summary message, perform matching between a local interface mapping relationship or a remote end interface mapping relationship carried in the link summary message and an interface mapping relationship stored in the opposite end, and if the matching is consistent, trigger the reading unit;
the reading unit is configured to: after being triggered, read the field in the subobject.

12. The system according to any one of claims 8 to 11, wherein: the ODUflex bandwidth hitless resizing capability is defined through a G.hao protocol.
